# EUROPEAN PATENT SPECIFICATION

(11) **EP 2 674 365 B1**
(45) Date of publication and mention of the grant of the patent: **08.07.2015**
(21) Application number: 13183611.6
(22) Date of filing: 16.02.2011
(51) Int. Cl.: B65B 61/02, B41M 5/24, G06K 19/08

(54) **Article tracking method**
Artikelverfolgungsverfahren
Procédé de suivi d'article

(30) Priority: 19.02.2010 GB 201002844
(43) Date of publication of application: 18.12.2013
(62) Divisional of application: 11705673.9
(73) Proprietor: Innovia Films Limited, Wigton Cumbria CA7 9BG (GB)
(72) Inventor: Stewart, Robert, Wigton, Cumbria CA7 9BG (GB); Gavel, Thierry, B-9820 Merelbeke (BE)
(74) Representative: Brand, Thomas Louis

(56) References cited:
- EP-A1- 1 459 988
- EP-A1- 1 953 684
- EP-A2- 1 953 683
- WO-A1-2008/156620
- DE-A1-102008 034 021
- US-A1- 2006 141 391
- US-B2- 6 766 951

## Description

The present invention generally relates to a method of marking randomly a code onto a transparent polymeric film. In particular a method of protecting an article against tampering and a method of providing anti-counterfeit protection to a genuine article.

Many tracking and tracing techniques of articles exist and are well known. Perhaps the most widely used system is that of barcodes. A barcode represents data in an optical-machine-readable form. Generally, the widths and spaces in a barcode represent different numbers and letters which are decodable by a barcode scanner. The scanned data is communicated to a central database which holds information on the barcode and the company/product to which the barcode is registered. The barcode can be used for stock control and pricing purposes, and for tracking the progress of a product through a supply chain, for example. However, problems are encountered if the barcode fades or is defaced such that it cannot be scanned easily, if at all. Barcodes are printed using standard printing technologies, which can be easily copied. They can, however, be encrypted, particularly 2D barcodes.

An alternative tracking system involves Radio Frequency Identification (RFID). RFID is a technology based on the transmission and reception of radio frequency signals between a transmitter (known as a reader) and a transponder (known as a tag). Generally, the reader sends a signal which is received by the tag; the tag then transmits a response signal that is received by the reader. In this way, the tag and any item to which it is attached may be identified and tracked. However, in addition to RFID technology being relatively expensive, other shortcomings include a limited lifetime if it is battery powered, the strength of the high frequency field can fall-off quickly giving limited read ranges, and ultra-high frequency systems suffer signal loss or attenuation through materials - which can causes poor penetration. RFID is undesirable in the bank note field because of the prejudice against remote scanning capability.

Many years ago, measures were also introduced to prevent unauthorised access to products before being sold or distributed. "Tampering" involves the deliberate altering or adulteration of information, a product, a package, or system. It became necessary to detect when a device or process had been tampered with so that the consumer would immediately realise that the integrity of the device or process may have been compromised. Tamper-evident design is perhaps most common in the area of product packaging and labelling; particularly the pharmaceutical sector where drug identity is vital. Pressure-sensitive labels, for instance, can be employed to seal pharmaceutical packaging such that a "void" mark remains on the packaging when the label is peeled away on opening. In packaging, tamper-evident closures comprise a frangibly connected tamper-evident ring or a tamper-evident tab, which is normally found on one side of the closure connected by a tear-off. However, pressure-sensitive labels generally do not cover the entire article and so it may still be vulnerable to unauthorised access, in some circumstances.

A further security concern is the counterfeiting of articles such as currency, which has a serious impact on the world's economy. In some countries, paper notes are marked with Ultra-Violet visible ink (widely available commercially) so that counterfeit notes may be detected. In addition, the counterfeiting of consumer goods, and especially cigarettes, perfumes, pharmaceutical products, CDs and DVDs may currently account for as much as an estimated 5 to 7% of world trade in such products. This represents significant losses both for brand owners and potentially for governments. In order to mislead a consumer into believing that a genuine product is being purchased, the packaging of the fake product is made to resemble closely that of the genuine product, or even to reproduce it exactly. Another form of counterfeit prevention includes digital watermarks. However, many of these techniques fail to perform their intended function of preventing counterfeiting because offenders have discovered ways of mimicking the genuine seals so that counterfeit articles appear genuine.

The field of track and trace is becoming increasingly the concern of governmental agencies and IP dependent industries as they seek to protect against black and grey market activities.

US 6,766,951 discloses apparatus for confining commodities in containers each of which consists of several components. The commodities are advanced along an elongated path past a series of stations where the components of the containers are draped around successive commodities. At least some of the components are provided with characteristic indicia, and a control circuit processes the indicia into information which is encoded upon the finished containers. Such information is decoded, when necessary, to ascertain the genuineness or lack of genuineness of the commodities, for example, the identity of the maker and packer of cigarettes in cigarette packs.

WO 2008/156620 discloses a method of scribing a graphic on a material, in which laser output is applied to the material. The laser output is moved relative to the material at a high speed greater than 10 m per second, and at a high power greater than 500 W, to scribe a graphic on a surface of the material. Also provided is a system for scribing a graphic on a material.

DE 10 2008 034021 discloses a method for producing a security and/or valuable product comprising the following method steps: a substrate is coated with a marking layer containing at least two different particulate luminescent substances that emit light under different conditions of the excitation of luminescence, wherein the particles of the luminescent substances are statistically distributed laterally, the marking layer is subjected to excitation conditions under which both luminescent substances luminesce, wherein the emitted light forms a random pattern specific to the security and/or valuable product, or the marking layer is subjected to excitation conditions under which only one of the luminescent substances luminesces, wherein the emitted light forms a partial random pattern specific to the security and/or valuable product; the pattern is detected metrologically and a character sequence is assigned to the pattern, and the assigned character sequence is applied on the security and/or valuable product in readable fashion as an identification character sequence.

EP 1 953 684 discloses a machine readable code which comprises at least a portion of a graphical indicium, the graphical indicium comprising a random arrangement of spots. At least some of the spots comprising the graphical indicium may have a dimension of less than one micrometre. The spots comprising the graphical indicium may vary in size and/or shape. The portion of the graphical indicium comprising the code may be delimited by a boundary, the boundary may be a temporary boundary which may be generated by a reading machine relative to a fixed trigger point only when the code is being read.

EP 1 953 683 discloses a machine readable code which comprises a portion of graphical indicium located on a substrate; wherein the code is delimited by a temporary boundary that is generated by a reading machine relative to a fixed trigger point only when the code is being read.

According to the present invention, there is provided a method of marking randomly a code onto a film comprising the steps of:
- providing a film;
- providing a laser assembly comprising a laser for marking the film and two galvanometer mounted mirrors for directing the laser in an x and y direction;
- driving the mirrors randomly by random current generation means; and
   characterised in that:
   said marking step employs a random current generated by at least one of electrical noise, ambient noise obtained by a microphone, a random number generator, and converting the feed from a camera looking at a white background.

A galvanometer is a device used for converting electrical current into mechanical motion and was frequently seen in devices such as electrical meters, pH meters and Geiger counters until the advent of digital technology - the electrical current flows through a coil which generates a magnetic field that twists the coil, pushing it against a spring which in turn moves a pointer. The movement of the pointer across a dial is relative to the amount of current supplied and, therefore, related to whatever generated that current; hence, its use as a form of meter for a variety of applications.

Galvanometers are used in a similar way for opto-mechanical purposes; instead of a needle, mirrors are mounted onto the rotary spring so that when a current is applied the mirror will rotate to a position relative to the magnitude of the current. In this fashion, mirrors can be rotated in a controlled fashion at potentially high speeds. Such galvanometer mounted mirrors are used to deflect laser beams to produce precisely controlled laser processing by acting as beam steering equipment.

The laser is directed using two galvanometer mounted mirrors, which can steer it in the x and y direction; galvanometers are driven by a current - their rotary position is proportional to the current they are exposed to, so introducing a random current into the system will randomly move the galvanometers.

The film is marked with a code using a random current generated by at least one of electrical noise, ambient noise obtained by a microphone, a random number generator, and converting the feed from a camera looking at a white background (the camera noise will be random). Other ways of creating a random current to create an at least partly random code may be possible.

It may be that it is the film itself that moves randomly during marking thereof to generate the at least partly random code. Of course, a random code may be effected by the combination of using a random current generator and moving the film in a concurrent fashion.

Optionally, the code is marked on the film by a frequency-tripled neodymium-doped yttrium aluminium garnet (Nd:YAG) laser.

The code may represent details of the article such as its lot number, price, stock levels, and any other relevant information which will be apparent to the skilled person.

The code may be at least partly random or generated to be at least partly random. This improves the security provided to the article because to undertake the task of copying the code is made particularly burdensome. Further, it may become nearly impossible to predict the code if, for example, it is generated randomly by a computer. In some examples of subject matter related to the invention, a portion of the code may not be random. The code may be random, partially random or pseudo-random.

Something that is pseudo-random may be something that appears to be random but is not; typically this may be something that is generated by a complex algorithm that will generate identical number sequences each time that it is run and, therefore, values within the sequence can be predicted. Statistical analysis may show a pseudo-random sequence as being random. The security of a pseudo-random sequence generally relies entirely upon the complexity of the algorithm.

The code may be defined by impressions in the film. The impression may be created by a press or the like. This may involve the embossing or debossing of the film to impart the code thereon, or the ablation of material from the surface of the film. The impressions may be considered to be "pits" in the film. Hence, it could be said that the film is "pitted" or "fractured". The impressions may be constituted by indentations; that is the impressions do not extend entirely through the film. This may help preserve the structure and integrity of the film.

The code may be defined by perforations in the film. The perforations are created by a laser. The perforations (extending through the film) may improve the visibility of the code to a scanner, for example, so that the code can be more accurately identified.

The perforations or pits (impressions) may range from 2 to 100 microns in diameter, preferably 3 to 80 microns, more preferably 4 to 70 microns, even more preferably 5 to 60 microns, more preferably still 10 to 50 microns, and yet further preferably 20 to 40. In some embodiments, the perforations or pits may range from 2 to 5 microns. In other embodiments, the perforations may range from 20 to 100 microns. The microscopic or approaching-microscopic nature of the code may make it particularly difficult to reproduce illegitimately, thus adding to the security provided by the code. One advantage is that it may not be possible to create the code having perforations ranging from 2 to 100 microns using standard technology which is commonly available to the public. The perforations may be less than 100 microns in diameter. The perforations or pits may be effected by a laser; particularly a frequency-tripled neodymium-doped yttrium aluminium garnet (Nd:YAG) laser.

A focusing lens may be included and operable to adjust the diameter of the perforations or pits.

The perforations or pits may have random diameters. For example, randomness in the size of the holes or depressions can be achieved using a focusing lens with a depth of field comparable to the flutter of a polymer web at that point. This may vary from film to film, so selection of lenses will be reliant on the film in question and the extent to which it flutters.

The code may be integrated into the film. If the code is marked on the film in a way other than impressing or perforating, such as by printing for example, the bond of the code with the film may not be considered to be very intimate and may be susceptible to failure. If the code is impressed or perforated onto the film using the method according to claim 1, it may be considered as being integrated in the film because it is formed integrally therewith. This may improve the longevity of the code on the film. In contrast to barcodes, for example, an integrated code may not be at risk of fading; particularly if the code is provided by perforations in the film.

The code may be operable to create a scattering effect when viewed by the naked eye. Being less visible to the naked eye may cause difficulty to a counterfeiter, for example, when attempting to imitate the code. The code may be invisible to the naked eye when viewed against a light (e.g. white) background. The code may be visible under a microscope with darkfield illumination, or in transmission, but may be invisible in reflection. The film itself may incorporate one or more fluorescent additives which allows the code to be clearly viewed under UV light, due to a light piping effect into pits/depressions.

The code may be machine-readable so that it can be detected in an efficient and accurate manner. The code may be readable using modest reading equipment. The film may be doped with a taggant, such as a uv taggant, anti-stokes phosphor, magnetic taggant and a fluorescent taggant.

The code may be marked on the film by a frequency-tripled neodymium-doped yttrium aluminium garnet (Nd:YAG) laser. This is a non-standard laser not in common use except for specialised applications; thus enhancing its suitability and effectiveness for producing the code on the film.

The code may be marked on the film by a laser selected from a dye laser, DPSS laser, diode laser, Carbon Dioxide laser and UV laser.

The laser may be pulsed at approximately 100 to 150 kHz. This offers a rapid process by which to produce the pattern or code on the film.

CO₂ lasers are the most commonly used industrial laser materials processing laser sources. The lasers first came into large scale usage in the 1980s and have continuously improved and lowered in price ever since. The laser energy is generated by the RF excitation of a low pressure gas mixture composed mainly of helium nitrogen and carbon dioxide. The laser output wavelength is 10.6µm (mid-infrared) and laser sources are available at power outputs as high as 30kW. The advantages lie primarily in the cost, durability and reliability of the equipment and the relatively low level of eye hazard at this wavelength. However, the mid-infrared wavelength has two limitations: the infra-red photons are low in energy and are not capable of inducing photochemical activity and the long wavelength means that the focused spot sizes tend to be large relative to shorter wavelength lasers. Unlike with a frequency-tripled neodymium-doped yttrium aluminium garnet (Nd:YAG) laser, perforations or pits as small as 2 to 100 microns are, therefore, difficult to achieve with CO₂ lasers under commercial/industrial as opposed to laboratory conditions.

A DPSS (Diode Pumped Solid State) laser is a type of laser that consists of a solid crystal laser medium that is excited using a diode light source. The reason behind this is that the crystal media (commonly Nd:YAG) were formerly excited using xenon flash lamps which emit a broadband of radiation ranging from near-UV to near-IR; therefore, a broad band source is very inefficient (the output efficiency of an Nd:YAG laser was around 1%). Such inefficiency causes problems with waste heat which requires cooling and, therefore, the sizes and power levels of solid state laser technology were also limited. The broadband output from the lamps also generates secondary emissions, therefore reducing the quality of the output beam.

DPSS lasers come in a variety of forms which usually consist of a diode source exciting an Nd:YAG crystal (others are available) which produces an output beam of 1064nm (very near-IR); this can either be used directly or it can be fed into non-linear optical crystals that can either double, triple, quadruple, the wavelength depending on the type of crystal used (with loss in output power which becomes more prohibitive the shorter the wavelength reached).

DPSS lasers have recently become much more widely available for 1064nm IR and 532nm Green outputs, but are still relatively specialised for shorter wavelengths due to losses in efficiency and the more complex and specialised hardware needed.

The frequency-tripled Nd:YAG has an output wavelength of 355nm - in the near UV and is focusable down to spot sizes such as 5µm, but 20µm for a more robust process and can be used to cleanly mark BOPP film. In practice, it was found that clear film could not be cleanly marked using longer wavelength solid state lasers and that CO₂ lasers struggled to get below 100µm.

The frequency-tripled Nd:YAG is commercially available, but it is uncommon; a user is more likely to have a green beam DPSS or 1064nm Nd:YAG. There is an added advantage in that, upon examining the types of marks that can be generated, a knowledgeable person is likely to believe that they were made by a CO₂ laser and so will attempt to replicate them using this equipment - they will be unable to achieve the marking fidelity of the frequency-tripled Nd:YAG.

Various embodiments of the present invention will now be described more particularly, by way of example only, with reference to the accompanying drawings, in which:
- Figure 1:: is a perspective view of a polymeric film;
- Figure 2:: is a perspective view of the film of Figure 1 marked with a code;
- Figure 3:: is a perspective view of the film of Figure 2 after splitting;
- Figure 4:: is a perspective view of an article wrapped with the film of Figure 3;
- Figure 5:: is a film formed according to an alternative embodiment of the present invention;
- Figure 6:: is a film formed according to further embodiment of the present invention;
- Figure 7:: is a plan view of an article wrapped in the film of Figure 5;
- Figure 8:: is a plan view of a different article bearing a barcode and wrapped in the film of Figure 5; and
- Figure 9:: is a perspective view of an article applied with coded films of various types.

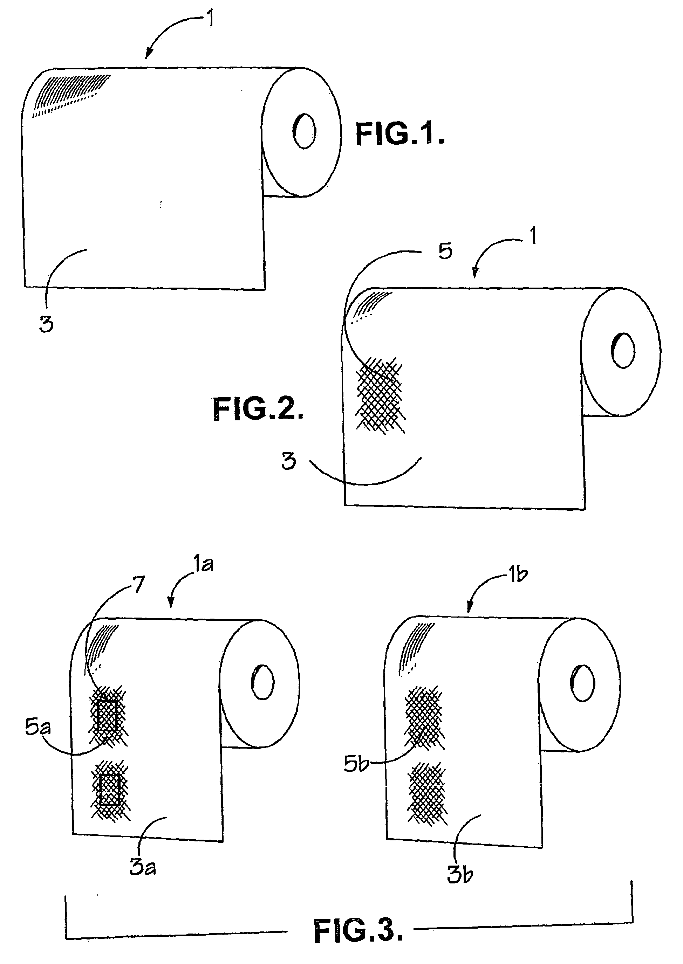

Referring to Figure 1, there is illustrated a cylindrical roll of polymeric film 1. The film 1 has a surface 3 for application of a code. The film 1 is transparent.

Figure 2 shows the film 1 of Figure 1 marked with a code 5 on surface 3. The code 5 is constituted by impressions 5 (in that the code is pitted into the surface 3 of the film 1) generated by a press or the like (not shown). In this way, the entire surface 3 of the film 1 is given an impressive code; although only a portion is shown impressed in Figure 2. Of course, in other embodiments, only a part of the film may be marked with a code (or "impressed"). The code 5 links and identifies all information needed (for example customer order number and production details) at the stage before it reaches the article.

With reference to Figure 3, there are depicted films 1 a and 1 b after "splitting" of the roll of film 1 of Figure 2. Using ink, windows 7 are printed on the surface 3a of film 1 a. In this embodiment, the windows 7 are used to define the area of interest. The windows 7 are discrete and are spaced by 1 metre intervals, but it will be appreciated that in other embodiments the interval spacing may differ depending on the dimensions of the article to be wrapped by the film. By contrast, no windows are printed on film 1 b.

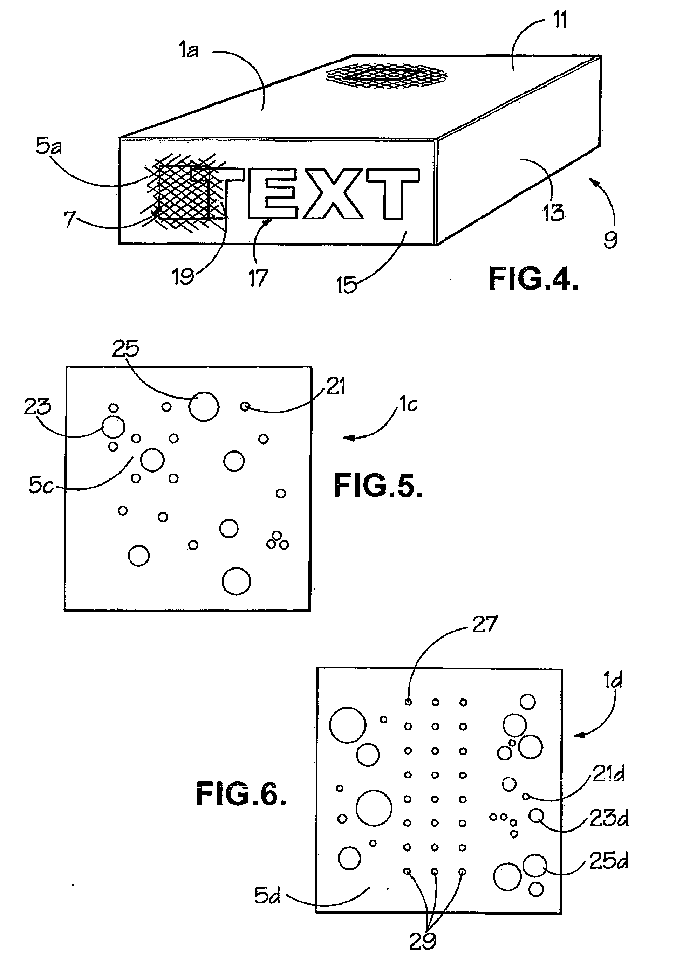

Figure 4 shows an article 9 provided in the form of a rigid medicament packaging 9. The packaging 9 generally has a parallelepiped shape having a top face 11, side face 13, and end face 15. On the end face 15 is printed "TEXT" 17. This "TEXT" 17 would, of course, normally indicate details of the contents of the packaging, but "TEXT" 17 here is shown for illustrative purposes so that the workings of the invention may be explained.

The packaging 9 is entirely wrapped in film 1a of Figure 3 bearing the impressed code 5a. Of course, in other embodiments, the packaging may only be partly wrapped. The window 7 partially superimposes the letter "T" 19 of the "TEXT" 17. The area of interest, therefore, comprises the printed window 7 and the portion of the "T" 19 visible through the window 7.

The area of interest, that is the window 7 and the portion of "T" 19, overlaid with the impressed code 5a defines a tracking zone, which tracking zone is imaged using a camera (not shown). The relationship between the area of interest and the code 5a is captured in the digital photograph and stored electronically so that it may later be relied upon to recognise a genuine or untampered article, or to track the article through a supply chain. If this relationship is later altered or misaligned illegitimately, it can be detected when the area of interest on the packaging 9 is again scanned and it does not match the stored digital photograph. To the unique stored image is attributed information such as the article lot no, stock level, and other product details for example. This information is used to track the article.

Referring now to Figure 5, there is illustrated an alternative embodiment of the film, generally indicated 1 c. The film 1 c is of clear polymeric bi-axially oriented polypropylene (BOPP) form and comprises a code 5c. In this embodiment, the code 5c is provided by a series of randomly sized perforations 21, 23 and 25 having diameters of 2, 50 and 100 microns, respectively. The code 5c is marked on the film 1c by a frequency-tripled neodymium-doped yttrium aluminium garnet (Nd:YAG) laser (not shown), pulsed at approximately 150 kHz. The perforations 21, 23 and 25 have a very clear, cylindrical appearance when viewed under a microscope or magnifying lens, but cause a scattering effect when viewed with the naked eye which gives them the appearance of being larger than they are. The perforations 21, 23 and 25 are purposely drilled at diameters of 2-100µm so that the code is below the minimum practical focused spot size for a CO₂ laser. A focusing lens (not shown) is used to adjust the diameter of the perforations in a random manner. The code 5c is thus integrated into the film 1c.

The code 5c is random not only by way of the varying perforation sizes, but also by the random arrangement/pattern of the perforations 21, 23 and 25, as can be seen in Figure 5. The random pattern is generated by a laser assembly (not shown) comprising a laser for marking the film 1 c and two galvanometer mounted mirrors for directing the laser in an x and y direction - the mirrors are driven randomly by random current generation means. The mirrors are mounted onto a rotary spring so that when a current is applied the mirror will rotate to a position relative to the magnitude of the current. The random current is generated by electrical noise. Of course, it will be understood that in other embodiments alternative ways of creating a random current may be employed.

Figure 6 shows another film 1d which is similar to that of Figure 5, except that its code 5d comprises a centrally-positioned non-random section represented by perforations 27 arranged in three equally spaced rows 29. On either side of the rows 29 is a random section constituted by differently-sized perforations 21d, 23d and 25d. The code may, therefore, be considered pseudo-random.

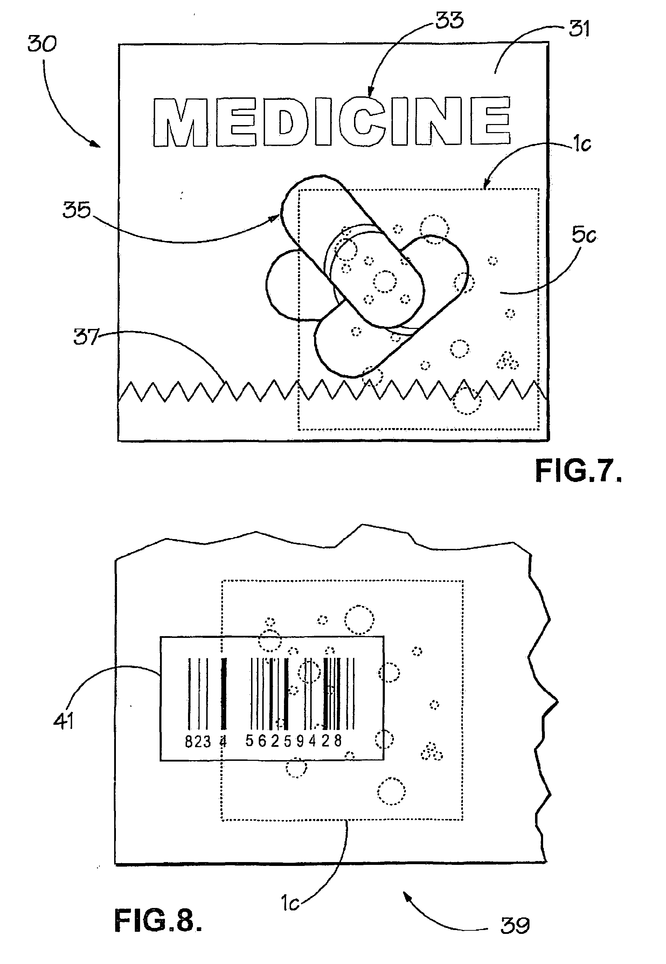

Referring now to Figure 7, there is illustrated a plan view of a medicine packet, generally indicated 30. Printed on its top face 31 is the word "MEDICINE" 33 and a graphic of three capsules 35. In this embodiment, the area of interest is represented by the graphic 35. The film 1c of Figure 5 is used to partly-wrap the packet 30. The film 1 c is positioned over the majority of the graphic 35 so that the code 5c is scattered thereover. The film 1c and its code 5c are shown in dashed lines. The tracking zone, defined by the overlap between the code 5C and the area of interest (graphic 35) of the partly-wrapped packet 30, is imaged using a camera, and the image data is stored in an electronic database for identification of the packet 30 at a later date. If the packet 30 is then opened along its serrated edge 37, the film 1c (and consequently its code 5c) will have moved so as to alter its positional alignment with the area of interest (graphic 35). The altered alignment will not match with the stored image in the electronic database, and thus the genuine packet 30a may be distinguished from a fake medicine packet.

Figure 8 illustrates a cut-away view of an article generally indicated 39. The article 39 bears a barcode 41. In this embodiment, the barcode 41 represents the area of interest which is marked directly onto the article 39 - not its packaging, for example. The coded film 1 c partly-wraps the article 39 in a similar fashion to that shown in Figure 7. Hence, the coded film 1c partly overlays the barcode. The function of the barcode 41 to track the article 39 can thus be combined with the function of the coded film 1c to provide security to the article 39.

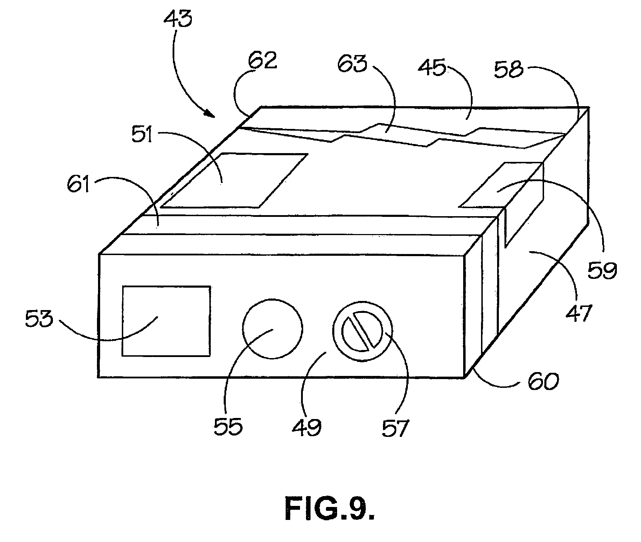

With reference to Figure 9, there is depicted a package 43 having the shape of a rectangular prism. The package 43 has a top face 45, side face 47, and end face 49. Figure 9 shows seven different types of areas of interest, each of which will have its own advantages. There are ten types of patch (three of which are not shown in Figure 9) that can be grouped into two distinct categories: non-functional, where the patch acts simply as a printed patch on a surface; or functional, where the patch cuts across features of the package involved in its opening.

### Non-functional:

1. Face square patch 51: The simplest patch located on the top face 45; the area is mathematically simple and so will be the easiest to capture, encode and store in a database.
2. Edge square patch 53: Again, a simple patch, but on the package end face 49. The distance to the corners for the edges are less than the face; therefore, we can expect less deformation of the printed area of interest below - this can be subdivided into four categories:
   a. Plain edge: no film features at this point.
   b. Adjacent seal edge: the area of interest is adjacent to a film seal; therefore, when the seal is broken so is the film at this point.
   c. Over seal edge: the area of interest is under the seal itself; therefore, two layers of film can be imaged.
   d. Fold edge: the area of interest is underneath a fold.
3. Round edge patch 55: located on end face 49. Geometrically, still simple, but a round patch would be more difficult for realignment of film afterwards as circles have no straight edges and are completely rotationally symmetrical.
4. Partial fill patch 57: located on the end face 49, and shaped like a "no-entry" sign in the UK Highway Code - that is a circle crossed with a line connecting diametrically opposed edges of the circle. In other embodiments, the patch can be any regular or irregular shape, but must be partially filled, i.e. contain areas within the outer perimeter that are areas of interest or not. This represents an increased level of complexity in both the imaging and also creates difficulty in any attempts to copy.

### Functional:

5. Corner patch 59: this area of interest covers two faces 45, 47 - in that the patch overlies the edge 58 connecting the top face 45 to side face 47; whilst at least twice as complex to image, it protects against the possibility that the edge 58 will be used for access to the package 43 either through a box flap-lid or through a deliberate cut.
6. Band 61: the banded area of interest runs all the way around the package 43 covering more surfaces and therefore protecting more of the package 43 including several edges 58, 60, 62 that could be used as points of access.
7. Jagged/Curved band 63: similar to band 61, but with an irregular shape.
8. Cross-tear tape patch (not shown): any of the above seven areas of interest that cut across a tear tape; the tear tape is the engineered method of gaining access to an overwrapped package 43 such as this and, therefore, any patch cutting across it would be severed.
9. Entire face detection (not shown): no printed pattern needed, protects a whole face. More of the overwrap is protected.
10. All over detection (not shown): area of interest is represented by the entire surface of the package 43, which is imaged; this has the advantages that any disruption destroys the pattern/code and no special print is needed.

A feature of the area of interest is that the film on top is likely to be dislodged relative to it upon opening; therefore, any feature that crosses an opening feature or covers larger areas of the package 43 has greater security.

## Claims

1. A method of marking randomly a code (5) onto a transparent, polymeric film (1) comprising the steps of:
- providing a transparent, polymeric film;
- marking the film using a laser assembly comprising a laser;
- directing the laser in an x and y direction using two galvanometer mounted mirrors;
- driving the mirrors randomly by random current generation means; and
**characterised in that**:
said marking step employs a random current generated by at least one of electrical noise, ambient noise obtained by a microphone, a random number generator, and converting the feed from a camera looking at a white background.

2. A method according to Claim 1, wherein the code (5) is marked on the film (1) by a frequency-tripled neodymium-doped yttrium aluminium garnet (Nd:YAG) laser.

3. A method according to Claim 1 or 2, wherein the code (5) is marked on the film (1) by a laser selected from a dye laser, DPSS laser, diode laser, Carbon Dioxide laser and UV laser.

4. A method according to any one of the preceding claims, wherein the code (5) comprises an at least partly random pattern of perforations (21, 23, 25, 27) or impressions (5a, 5b, 5c, 5d).

5. A method according to any one of the preceding claims, wherein the code is defined by perforations (21, 23, 25, 27) or impressions (5a, 5b, 5c, 5d) ranging from 2 to 100 microns in diameter and/or is defined by perforations or impressions ranging from 2 to 5 microns in diameter and/or is defined by perforations or impressions ranging from 20 to 100 microns in diameter.

6. A method according to any one of the preceding claims, further comprising adjusting, using a focusing lens, the diameter of the perforations (21, 23, 25, 27) or impressions (5a, 5b, 5c, 5d).

7. A method according to any one of the preceding claims, wherein the perforations (21, 23, 25, 27) or impressions (5a, 5b, 5c, 5d) have random diameters.

8. A method according to any one of the preceding claims, further comprising pulsing the laser at approximately 150kHz.

9. A method according to any one of the preceding claims, wherein the film (1) is doped with a taggant.

10. A method according to Claim 9, wherein the taggant is selected from uv taggant, anti-stokes phosphor, magnetic taggant and a fluorescent taggant.

11. A method according to any one of the preceding claims, wherein the code (5) is integrated into the film (1) and/or is operable to create a scattering effect when viewed by the naked eye, and/or is machine-readable.

12. A method according to any one of the preceding claims, further comprising moving the film (1) randomly during marking thereof to generate the code (5).

## Patentansprüche

1. Verfahren zum zufälligen Markieren eines Codes (5) auf eine transparente Polymerfolie (1), das folgende Schritte umfasst:
- Bereitstellen einer transparenten Polymerfolie;
- Markieren der Folie unter Verwendung einer einen Laser umfassenden Laseranordnung;
- Richten des Lasers in einer x- und y-Richtung unter Verwendung von zwei auf einem Galvanometer angebrachten Spiegeln;
- zufälliges Antreiben der Spiegel durch Zufallsstromerzeugungsmittel; und **dadurch gekennzeichnet, dass**:
der Markierungsschritt einen Zufallsstrom nutzt, der durch mindestens eines der Folgenden erzeugt wird: elektrisches Rauschen, durch ein Mikrofon erhaltenes Umgebungsrauschen, einen Zufallszahlengenerator und Umwandeln der Eingabe von einer auf einen weißen Hintergrund gerichteten Kamera.

2. Verfahren nach Anspruch 1, wobei der Code (5) durch einen frequenzverdreifachten neodymdotierten Yttrium-Aluminium-Granat(Nd:YAG)-Laser auf die Folie (1) markiert wird

3. Verfahren nach Anspruch 1 oder 2, wobei der Code (5) durch einen Laser auf der Folie (1) markiert wird, der ausgewählt ist aus: einem Farbstofflaser, DPSS-Laser, Diodenlaser, Kohlendioxidlaser und UV-Laser.

4. Verfahren nach einem der vorangehenden Ansprüche, wobei der Code (5) ein mindestens teilweise zufälliges Muster von Perforationen (21, 23, 25, 27) oder Eindrücken (5a, 5b, 5c, 5d) umfasst.

5. Verfahren nach einem der vorangehenden Ansprüche, wobei der Code durch Perforationen (21, 23, 25, 27) oder Eindrücke (5a, 5b, 5c, 5d) definiert ist, deren Durchmesser im Bereich von 2 bis 100 Mikrometern liegt und/oder durch Perforationen oder Eindrücke definiert ist, deren Durchmesser im Bereich von 2 bis 5 Mikrometern liegt und/oder durch Perforationen oder Eindrücke definitert ist, deren Duchmesser im Bereich von 20 bis 100 Mikrometern liegt.

6. Verfahren nach einem der vorangehenden Ansprüche, weiter umfassend das Einstellen, unter Verwendung einer Einstelllupe, des Durchmessers der Perforationen (21, 23, 25, 27) oder Eindrücke (5a, 5b, 5c, 5d).

7. Verfahren nach einem der vorangehenden Ansprüche, wobei die Perforationen (21, 23, 25, 27) oder Eindrücke (5a, 5b, 5c, 5d) zufällige Durchmesser aufweisen.

8. Verfahren nach einem der vorangehenden Ansprüche, weiter umfassend das Pulsen des Laser mit ungefähr 150 kHz.

9. Verfahren nach einem der vorangehenden Ansprüche, wobei die Folie (1) mit einem Taggant dotiert ist.

10. Verfahren nach Anspruch 9, wobei der Taggant ausgewählt ist aus UV-Taggant, Anti-Stokes-Phosphor, magnetischem Taggant und einem fluoreszierenden Taggant.

11. Verfahren nach einem der vorangehenden Ansprüche, wobei der Code (5) in die Folie (1) integriert ist und/oder wirksam ist, um einen Streueffekt bei Betrachtung mit dem bloßen Auge zu schaffen und/oder maschinenlesbar ist.

12. Verfahren nach einem der vorangehenden Ansprüche, weiter umfassend das zufällige Bewegen der Folie (1) während des Markierens derselben, um den Code (5) zu erzeugen.

## Revendications

1. Procédé de marquage aléatoire d'un code (5) sur un film polymère transparent (1) comprenant les étapes consistant à :
- fournir un film polymère transparent ;
- marquer le film avec un ensemble laser comprenant un laser ;
- diriger le laser dans un sens x et y en utilisant deux miroirs montés sur galvanomètre ;
- commander les miroirs de manière aléatoire par un moyen de génération de courant aléatoire ; et **caractérisé en ce que** :
ladite étape de marquage emploie un courant aléatoire généré par au moins l'un d'un bruit électrique, d'un bruit ambiant obtenu par un microphone, d'un générateur de nombres aléatoires, et la conversion de l'alimentation d'une caméra regardant un fond blanc.

2. Procédé selon la revendication 1, dans lequel le code (5) est marqué sur le film (1) par un laser à grenat d'yttrium et d'aluminium dopé au néodyme (Nd:YAG) à fréquence triplée.

3. Procédé selon la revendication 1 ou 2, dans lequel le code (5) est marqué sur le film (1) par un laser sélectionné parmi un laser à colorant, un laser DPSS, un laser à diode, un laser au dioxyde de carbone et un laser UV.

4. Procédé selon l'une quelconque des revendications précédentes, dans lequel le code (5) comprend une configuration au moins partiellement aléatoire de perforations (21, 23, 25, 27) ou d'impressions (5a, 5b, 5c, 5d).

5. Procédé selon l'une quelconque des revendications précédentes, dans lequel le code est défini par des perforations (21, 23, 25, 27) ou des impressions (5a, 5b, 5c, 5d) d'un diamètre de 2 à 100 microns et/ou est défini par des perforations ou des impressions d'un diamètre de 2 à 5 microns et/ou est défini par des perforations ou des impressions d'un diamètre de 20 à 100 microns.

6. Procédé selon l'une quelconque des revendications précédentes, comprenant en outre le réglage, au moyen d'une lentille de focalisation, du diamètre des perforations (21, 23, 25, 27) ou des impressions (5a, 5b, 5c, 5d).

7. Procédé selon l'une quelconque des revendications précédentes, dans lequel les perforations (21, 23, 25, 27) ou impressions (5a, 5b, 5c, 5d) ont des diamètres aléatoires.

8. Procédé selon l'une quelconque des revendications précédentes, comprenant en outre la pulsation du laser à approximativement 150 kHz.

9. Procédé selon l'une quelconque des revendications précédentes, dans lequel le film (1) est dopé avec un traceur.

10. Procédé selon la revendication 9, dans lequel le traceur est sélectionné parmi un traceur UV, un phosphore anti-Stockes, un traceur magnétique et un traceur fluorescent.

11. Procédé selon l'une quelconque des revendications précédentes, dans lequel le code (5) est intégré dans le film (1) et/ou est exploitable pour créer un effet de diffusion quand il est vu à l'oeil nu, et/ou est lisible par machine.

12. Procédé selon l'une quelconque des revendications précédentes, comprenant en outre le déplacement du film (1) de manière aléatoire durant son marquage pour générer le code (5).
